# EUROPÄISCHE PATENTSCHRIFT

(11) **EP 1 391 694 B1**
(45) Veröffentlichungstag und Bekanntmachung des Hinweises auf die Patenterteilung: **20.10.2010**
(21) Anmeldenummer: 03012297.2
(22) Anmeldetag: 12.06.2003
(51) Int. Cl.: G01C 21/32

(54) **Verfahren zum Ermitteln von Kartendaten**
Method for determining map data
Procédé pour déterminer des données cartographiques

(30) Priorität: 22.08.2002 DE 10238530
(43) Veröffentlichungstag der Anmeldung: 25.02.2004
(73) Patentinhaber: ROBERT BOSCH GMBH, 70442 Stuttgart (DE)
(72) Erfinder: Otte, Dirk, 30880 Laatzen (DE)

(56) Entgegenhaltungen:
- DE-A1- 3 744 533
- JIE SHAN, D. SCOTT LEE: ISPRS COMMISSION IV SYMPOSIUM GEOSPATIAL THEORY, PROCESSING AND APPLICATIONS, Bd. XXXIV, 8. Juli 2002 (2002-07-08), - 12. Juli 2002 (2002-07-12) XP002449128 Ottawa ISSN: 1682-1750 Gefunden im Internet: URL:http://www.isprs.org/commission4/proce edings02/pdfpapers/492.pdf> [gefunden am 2007-08-30]
- DOUGLAS D H ET AL: "ALGORITHMS FOR THE REDUCTION OF THE NUMBER OF POINTS REQUIRED TO REPRESENT A DIGITIZED LINE OR ITS CARICATURE" CANADIAN CARTOGRAPHER, YORK UNIVERSITY, DOWNSVIEW, CA, Bd. 10, Nr. 2, 1973, Seiten 112-122, XP009005710 ISSN: 0008-3127

## Beschreibung

### Technisches Gebiet

Die vorliegende Erfindung betrifft ein Verfahren zum Ermitteln von Kartendaten, für mindestens eine Anzeigeeinrichtung eines einem Fortbewegungsmittel zugeordneten Informationssystems, gemäß dem Oberbegriff des Anspruchs 1.

### Stand der Technik

Ein Verfahren der im Oberbegriff des Anspruchs 1 genannten Art ist grundsätzlich bekannt (vgl. Jie Shan, D. Scott Lee: "Generalization of building polygons extracted from ikonos imagery", in ISPRS Commission IV Symposium Geospatial Theory, Processing and Applications, Band XXXIV, 8. Juli 2002 bis 12. Juli 2002, Ottawa; abrufbar unter http:llwww.isprs.orglcommission4/proceedings02/pdfpapers/492.pdf). Außerdem ist der ein Abstandskriterium für die Reduktion von Linien-Eckpunkten anwendende Douglas-Peucker-Algorithmus bekannt (vgl. zum Douglas-Peucker-Algorithmus: David H. Douglas, Thomas K. Peucker: "Algorithms for the reduction of the number of points required to represent a digitized line or its caricature", Canadian Cartographer, York University, Downsview, Canada, Band 10, Nr 2, 1973, Seiten 112 bis 122).

Ein weiteres, auf einem Abstandskriterium für die Reduktion von Linien-Eckpurikten beruhendes Verfahren ist in der Druckschrift DE 37 44 533 A1 beschrieben.

Bei Informationssystemen für Führer von Fortbewegungsmitteln, insbesondere von Kraftfahrzeugen, werden die Informationen akustisch und/oder optisch durch Symbole dargeboten. Die zusätzliche Darstellung einer Straßenkarte auf einer Anzeigeeinrichtung oder auf einem Display ist hierbei eine wichtige Hilfe für den Führer des Fortbewegungsmittels oder für dessen Beifahrer und stellt demzufolge ein durchaus relevantes Kaufkriterium dar.

Neben Straßenlinien werden auf dieser Karte auch Flächen, wie etwa Bebauungsflächen, Gewässer, Parks oder dergleichen, andere Linien, wie etwa Eisenbahnen, Grenzen oder dergleichen, sowie markante Punkte (= sogenannte P[oints]O[f]l[nterest]), wie etwa Ortszentren, Tankstellen oder dergleichen, in dieser Karte dargestellt. Um diese Karte während der Fahrt des Fortbewegungsmittels auf möglichst einfache und schnelle Weise ständig neu zeichnen zu können, ist es erforderlich, die darzustellenden Daten aufzubereiten und in ein spezielles Format zu konvertieren.

Im Detail bedeutet dies, daß dem Führer des Fortbewegungsmittels auf der Anzeigeeinrichtung des Informationssystems, insbesondere des Navigationssystems, verschiedene Informationen in Teilbereichen dieser Anzeigeeinrichtung angezeigt werden. Hierbei kann zum Beispiel die Straßenkarte mit einem Umgebungsbereich der aktuellen Position des Fortbewegungsmittels zusammen mit Informationen über die Umgebung angezeigt werden.

Die Informationen über die Umgebung des Fortbewegungsmittels werden auf der Anzeigeeinrichtung in der Regel
- durch verschiedenfarbige Flächen zur Unterscheidung zum Beispiel der Bebagungsflächen, der Gewässer und der Parks,
- durch verschiedenfarbige Linien zur Darstellung zum Beispiel der Eisenbahntrassen und der Grenzen sowie
- durch markante Punkte zur Darstellung zum Beispiel der Ortszentren und der Tankstellen
wiedergegeben.

Die Kartendaten zur Darstellung der Flächen bzw. der Kartenbereiche werden in der Regel durch einen geschlossenen Randlinienzug aus Randlinienstrecken beschrieben. Der Randlinienzug wird hierbei als Folge von Eckpunkten beschrieben, zwischen denen die Randlinienstrecken ausgebildet sind. Diese Folgen von Eckpunkten sind auf einem lokalen Datenträger gespeichert oder werden mittels D[aten]F[ern]Ü[bertragung] angefordert.

Wie bereits vorstehend angedeutet, sind die Darstellungen auf der Karte während der Fahrt des Fortbewegungsmittels ständig zu aktualisieren und somit neu zu zeichnen. Hierzu werden die relevanten Kartendaten aufgerufen und mit der im Fortbewegungsmittel dafür vorgesehenen Recheneinrichtung durch Koordinatentransformation in für die Anzeigeeinrichtung geeignete Kartenbereiche konvertiert.

Um eine schnelle Aufbereitung der Kartendaten im geeigneten Anzeigeformat zu ermöglichen, werden die Kartendaten geographischer Bereiche im allgemeinen in verschiedenen Maßstäben gespeichert. Zu diesem Zwecke müssen aus den zum Beispiel durch geographische Vermessung oder durch Einscannen älteren Kartenmaterials gewonnenen Daten geeignete Kartendaten für die Darstellung auf der Anzeigeeinrichtung gewonnen werden.

Derartige Kartendaten sind oftmals sehr umfangreich, denn die darzustellenden Kartenbereiche bzw. -flächen sind sehr komplex und demzufolge sind die Koordinaten vieler Eckpunkte zu speichern, auch wenn die Komplexität der Fläche im jeweiligen Maßstab auf der Anzeigeeinrichtung nicht wiedergegeben werden kann.

Beim Konvertieren während der Fahrt des Fortbewegungsmittels werden zunächst die Eckpunkte des gespeicherten Kartenbereichs durch Koordinatentransformation in Eckpunkte des anzuzeigenden Kartenbereichs transformiert. Anschließend werden von einem Füllpunkt innerhalb der Randlinie ausgehend die weiteren Bildpunkte des Kartenbereichs bis zur Randlinie ermittelt und mit der Flächenfarbe aufgefüllt.

Eine geeignete Position eines Füllpunkts innerhalb der Randlinie ist jedoch zunächst unbekannt und kann nicht unmittelbar aus der gespeicherten Folge von Eckpunkten erkannt werden. Der Füllpunkt sollte einen gewissen Mindestabstand zum Rand der Fläche bzw. des Kartenbereichs haben, denn beim Konvertieren der gespeicherten Kartendaten wird eine Koordinatentransformation, insbesondere eine Drehung, eventuell auch eine Streckung und/oder eine Translation, vorgenommen, bei der verschiedene Bildpunkte des Kartenbereichs auf einen Bildpunkt des Anzeigekartenbereichs abgebildet werden können.

Wird in den Kartendaten ein Eingangsfüllpunkt gespeichert, der innerhalb der Randlinie des Kartenbereichs liegt, so kann dieser Eingangsfüllpunkt beim Konvertieren bzw. Transformieren eventuell auf einen gleichen Bildpunkt wie ein Randpunkt der Randlinie abgebildet werden. In diesem Falle führt das nachfolgende Auffüllverfahren zur Ausbildung des farbigen Anzeigekartenbereichs jedoch dazu, daß von der Randlinie ausgehend der gesamte Bildschirm mit der einheitlichen Farbe ausgefüllt wird und somit ein fehlerhaftes Bild dargestellt wird.

Ein Ermitteln eines geeigneten Füllpunkts ist jedoch insbesondere bei komplexen, verwinkelten Flächen aufwendig, so daß oftmals in den gespeicherten Kartendaten zusätzlich zur Folge von Eckpunkten geeignete Eingangsfüllpunkte gespeichert werden, wodurch die gespeicherte Datenmenge jedoch deutlich erhöht wird.

Da zum Speichern der vielen Eckpunkte und gegebenenfalls der Eingangsfüllpunkte ein erheblicher Speicherplatz erforderlich ist, ist die Speicherung größerer geographischer Bereiche in mehreren Maßstäben auf üblichen Datenträgern, wie etwa auf einer C[ompact]D[isc], problematisch.

Weiterhin kann das durchzuführende Rechenverfahren insbesondere bei komplexen, verwinkelten Flächen aufgrund der begrenzten Rechenkapazität der im Fortbewegungsmittel vorhandenen Recheneinrichtung eine längere Zeitdauer in Anspruch nehmen, was vom Führer des Fortbewegungsmittels als störend empfunden wird und was eine flüssige sowie genaue Anzeige der jeweiligen Fahrposition und -umgebung verhindert.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art so weiterzuentwickeln, dass die Kartendaten für mindestens eine Anzeigeeinrichtung eines einem Fortbewegungsmittel zugeordneten Informations- oder Navigationssystems in generalisierter Form ermittelt und in mehreren Maßstäben auf üblichen Datenträgern, wie etwa auf einer C[ompact]D[isc], gespeichert werden.

Diese Aufgabe wird gemäß der Lehre der vorliegenden Erfindung durch ein Verfahren mit den im Anspruch 1 genannten Merkmalen gelöst. Vorteilhafte Ausgestaltungen und zweckmäßige Weiterbildungen der vorliegenden Erfindung sind in den Unteransprüchen gekennzeichnet.

Mithin ist der Kern der vorliegenden Erfindung in der Möglichkeit zu sehen, nadelförmige Einkerbungen und/oder nadelförmige Spitzen von insbesondere komplexen, verwinkelten Flächen zu glätten (jede Fläche wird durch mindestens eine geordnete Liste ihrer Eckpunkte beschrieben). Die vorliegende Erfindung lehrt hierbei,
- die betreffenden Flächen zumindest ein wenig zu vergrößern, um die Einkerbungen zu schließen, und/oder
- die betreffenden Flächen zumindest ein wenig zu verkleinern, um die Spitzen zu beseitigen.

Im Rahmen der vorliegenden Erfindung können also bei zweidimensionalen Flächenbereichen
- nur die nadelförmigen Einkerbungen geschlossen, die nadelförmigen Spitzen jedoch belassen werden (beispielsweise dann, wenn auf nadelförmige Spitzen in Form von langen schmalen Flächen, wie etwa bei Flußläufen, nicht verzichtet werden soll, um diese Flußläufe auch weiterhin in ein Meer münden zu lassen);
- nur die nadelförmigen Spitzen gelöscht, die nadelförmigen Einkerbungen jedoch belassen werden;
- unabhängig voneinander die nadelförmigen Einkerbungen geschlossen und die nadelförmigen Spitzen gelöscht werden; oder
- in Kombination miteinander sowohl die nadelförmigen Einkerbungen geschlossen als auch die nadelförmigen Spitzen gelöscht werden.

Für ein erfolgreiches Ergebnis des vorliegenden Verfahrens letztendlich entscheidend ist, daß durch das Schließen der Einkerbungen und/oder durch das Beseitigen der Spitzen eine einfachere, eine geringere Anzahl von Eckpunkten aufweisende Fläche generiert wird.

Hierdurch unterscheidet sich die vorliegende Erfindung von der gemäß dem Stand der Technik beschriebenen Vorgehensweise, zum "Generalisieren von Flächen" eben diese Flächen in Teilflächen aufzuteilen und auf diese Art die nicht-relevanten Teilflächen zu löschen; bei dieser bekannten Vorgehensweise wird nämlich der Flächeninhalt der Gesamtfläche nicht verändert, das heißt die Summe der abgetrennten Teilflächen bleibt genau so groß wie die Originalfläche vor dem Generalisieren.

Der Fachmann auf dem vorliegenden technischen Gebiet wird insbesondere zu schätzen wissen, daß sich durch das Weglassen von nicht-relevanten Eckpunkten bei der vorliegenden Erfindung die Zeichnungsgeschwindigkeit deutlich erhöht; weniger Eckpunkte bedeutet auch, daß weniger Arbeitsspeicher für die Eckpunkte benötigt wird.

In diesem Zusammenhang werden Eckpunkte genau dann als nichtrelevant betrachtet, wenn sie eine nadelförmige Einkerbung oder eine nadelförmige Spitze bilden. Zur Definition von "nadelförmig" wird der Winkel am Eckpunkt betrachtet: Ist dieser Winkel kleiner als ein maximaler Grenzwinkel oder Maximalwert, so handelt es sich um eine nadelförmige Einkerbung; ist dieser Winkel größer als ein minimaler Grenzwinkel oder Minimalwert, so handelt es sich um eine nadelförmige Spitze.

Im Detail wird bei der vorliegenden Erfindung also zunächst für den zweidimensionalen Kartenbereich, der durch eine Folge von mehr als drei Eckpunkten definiert ist, in einem Verfahrensschritt [a] der sich am jeweils gerade betrachteten Eckpunkt befindliche Winkel berechnet; dieser Winkel wird von zwei Linien eingeschlossen, nämlich
- von der Randlinienstrecke (= Verbindungsgeraden) vom dem betrachteten Eckpunkt vorhergehenden Eckpunkt zum betrachteten Eckpunkt und
- von der Randlinienstrecke (= Verbindungsgeraden) vom betrachteten Eckpunkt zum dem betrachteten Eckpunkt nachfolgenden Eckpunkt.

Definitionsgemäß wird hierbei der Winkel betrachtet, der außerhalb des zweidimensionalen Kartenbereichs gelegen ist (gemäß der vorliegenden Erfindung kann zur Berechnung natürlich alternativ auch der zu 360 Grad komplementäre Winkel innerhalb des zweidimensionalen Kartenbereichs herangezogen werden; dieser Komplementärwinkel ist im Falle des Vorliegens einer nadelförmigen Einkerbung dann größer als ein minimaler Grenzwinkel oder Minimalwert von beispielsweise 350 Grad; entsprechend ist dieser Komplementärwinkel im Falle des Vorliegens einer nadelförmigen Spitze dann kleiner als ein maximaler Grenzwinkel oder Maximalwert von beispielsweise zehn Grad).

Generell gilt in diesem Zusammenhang, daß ein Winkel an einem Eckpunkt als Winkel vom vorhergehenden Eckpunkt über den betrachteten Eckpunkt zum nachfolgenden Eckpunkt bestimmt wird.

Die Eckpunkte einer Fläche sind hierbei vorzugsweise im mathematisch positiven Sinne, das heißt entgegen dem Uhrzeigersinn orientiert, so daß der Kartenbereich beim Entlangfahren auf der Randlinie von Eckpunkt Pi zu Eckpunkt Pi+1 stets links von der Randlinie liegt; grundsätzlich kann das Verfahren gemäß der vorliegenden Erfindung jedoch entsprechend auch mit entgegengesetzter Orientierung durchgeführt werden.

Die weitere Vorgehensweise im Verfahren hängt davon ab, ob der im Rahmen des Verfahrensschritts [a] ermittelte Winkel am betrachteten Eckpunkt gemäß einem Verfahrensschritt [b] ein bestimmtes mathematisches Kriterium erfüllt:

Wenn es um nadelförmige Einkerbungen geht, so wird untersucht, ob der ermittelte Winkel am betrachteten Eckpunkt kleiner als ein gegebener oder vorgebbarer maximaler Grenzwert von beispielsweise zehn Grad ist; alternativ oder ergänzend hierzu wird im Falle des Auffindens von nadelförmigen Spitzen untersucht, ob der ermittelte Winkel am betrachteten Eckpunkt größer als ein gegebener oder vorgebbarer minimaler Grenzwert von beispielsweise 350 Grad ist.

Ist das geforderte mathematische Kriterium (= Unterschreiten des Maximalwinkels im Falle aufzufindender nadelförmiger Einkerbungen und/oder Überschreiten des Minimalwinkels im Falle aufzufindender nadelförmiger Spitzen) erfüllt, so wird in einem Verfahrensschritt [c] der betrachtete Eckpunkt gelöscht, und zwar insbesondere aus mindestens einer geordneten Liste der Eckpunkte des Kartenbereichs.

Die durch das Löschen des betrachteten Eckpunkts entstandene "Lücke" wird dadurch geschlossen, dass der dem gelöschten Eckpunkt vorhergehende Eckpunkt mit dem dem gelöschten Eckpunkt nachfolgenden Eckpunkt verbunden wird. Auf diese Weise entsteht wiederum eine Abfolge von Eckpunkten, durch die
- der nunmehr etwas größere, weil um die nadelförmige Einkerbung bereinigte Kartenbereich oder
- der nunmehr etwas kleinere, weil um die nadelförmige Spitze bereinigte Kartenbereich
definiert wird.

Diese ermittelte Folge von Eckpunkten wird erfindungsgemäß in einem nachfolgenden Verfahrensschritt [d] als Unterfolge in mindestens einer Kartenspeichereinheit abgespeichert.

Gemäß einer besonders vorteilhaften Weiterbildung des vorliegenden Verfahrens können nach Löschen des betrachteten Eckpunkts der Verfahrensschritt [a], der Verfahrensschritt [b] und erforderlichenfalls der Verfahrensschritt [c]
- für den dem gelöschten Eckpunkt vorhergehenden Eckpunkt und/oder
- für den dem gelöschten Eckpunkt nachfolgenden Eckpunkt durchgeführt werden.

Wenn diese optionale Vorgehensweise in zweckmäßiger Form noch verallgemeinert werden soll, so bietet es sich an, den Verfahrensschritt [a], den Verfahrensschritt [b] und gegebenenfalls den Verfahrensschritt [c] für jeden Eckpunkt des Kartenbereichs durchzuführen, und zwar insbesondere iterativ und/oder insbesondere nacheinander.

Zusammenfassend ist der Kern der vorliegenden Erfindung mithin in der Bereitstellung einer kostengünstigen Systemlösung zu sehen, bei der Kartendaten ermittelt werden, die ein Speichern ausgedehnter geographischer Bereiche in mehreren Maßstäben mit relativ geringem Speicheraufwand ermöglichen und die weiterhin ein schnelles sowie sicheres Ermitteln der aktuellen Anzeigedaten für eine Anzeigeeinrichtung gewährleisten.

Durch das schnelle Ermitteln der Anzeigedaten wird eine fließende Darstellung der sich ändernden Anzeigekartenbereiche während einer Fahrt des Fortbewegungsmittels ermöglicht, die vom Benutzer als angenehm, instruktiv und leicht ablesbar empfunden wird.

Die vorliegende Erfindung betrifft des weiteren ein einem Fortbewegungsmittel zugeordnetes Informationssystem, insbesondere Navigationssystem, arbeitend gemäß einem Verfahren gemäß der vorstehend dargelegten Art.

Die vorliegende Erfindung betrifft schließlich die Verwendung eines Verfahrens gemäß der vorstehend dargelegten Art und/oder mindestens eines einem Fortbewegungsmittel zugeordneten Informationssystems gemäß der vorstehend dargelegten Art in mindestens einer Navigationseinrichtung.

Das vorliegende Verfahren kann also während der Aufbereitung der Daten für Fahrer-Informationssysteme und hierbei insbesondere für Navigationssysteme eingesetzt werden. Die Rohdaten sind sehr detailliert und werden für die unterschiedlichen Darstellungsmaßstäbe im Fahrer-Informationssystem unterschiedlich stark generalisiert und damit auch vereinfacht.

Die hier beschriebene Generalisierungsmethode basiert auf dem Weglassen von nicht-relevanten Flächeneckpunkten. Dieses Verfahren kann insbesondere auch während der Fahrt des Fortbewegungsmittels angewendet werden, sofern die im Fahrer-Informationssystem verfügbare Prozessoreinheit eine entsprechende Performance aufweist.

Durch das Weglassen der nicht-relevanten Flächeneckpunkte erhöht sich nicht nur die Geschwindigkeit beim Zeichnen des zweidimensionalen Kartenbereichs, zusätzlich wird auch noch der im. Fortbewegungsmittel benötigte Arbeitsspeicher reduziert, in den zum Zeichnen alle Eckpunkte gleichzeitig geladen werden müssen.

Das Einsparen des erforderlichen Arbeitsspeichers wiederum bedeutet, daß dieser Arbeitsspeicher für andere Aufgaben zur Verfügung steht oder ganz weggelassen werden kann. In diesem Zusammenhang können die notwendigen mathematischen Prozesse ganz durch eine hardwaremäßig implementierte Recheneinrichtung bzw. Bordrecheneinrichtung ausgeführt werden.

### Kurze Beschreibung der Zeichnungen

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend anhand der drei durch die Figuren 1A, 1B, durch die Figuren 2A, 2B sowie durch die Figuren 3A, 3B veranschaulichten Ausführungsbeispiele näher erläutert.

Es zeigt:

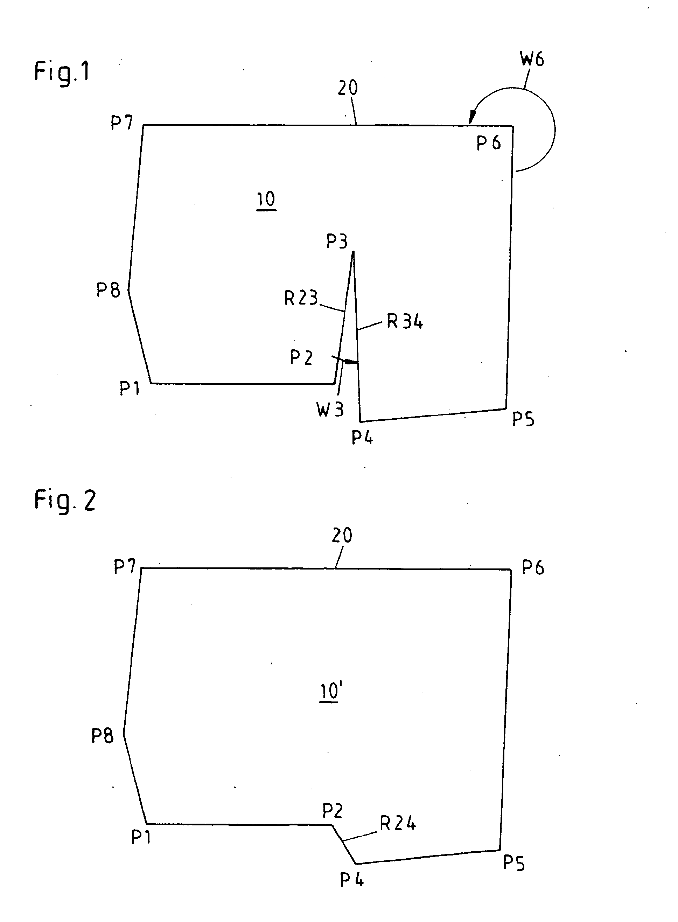

- Fig. 1A: in schematischer Darstellung einen als Fläche mit nadelförmiger Einkerbung ausgebildeten und mit Eckpunkten versehenen zweidimensionalen Kartenbereich vor dem Generalisieren;
- Fig. 1B: in schematischer Darstellung den als Fläche nunmehr ohne die nadelförmige Einkerbung ausgebildeten und mit Eckpunkten versehenen zweidimensionalen Kartenbereich nach dem Generalisieren mittels des Verfahrens gemäß der vorliegenden Erfindung;

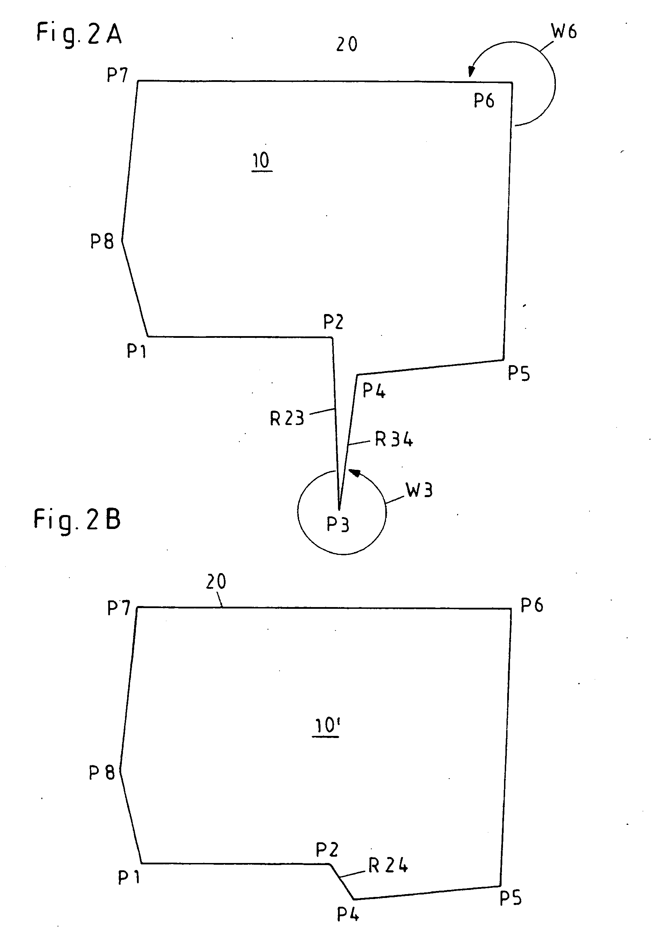

- Fig. 2A: in schematischer Darstellung einen als Fläche mit nadelförmiger Spitze ausgebildeten und mit Eckpunkten versehenen zweidimensionalen Kartenbereich vor dem Generalisieren;
- Fig. 2B: in schematischer Darstellung den als Fläche nunmehr ohne die nadelförmige Spitze ausgebildeten und mit Eckpunkten versehenen zweidimensionalen Kartenbereich nach dem Generalisieren mittels des Verfahrens gemäß der vorliegenden Erfindung;

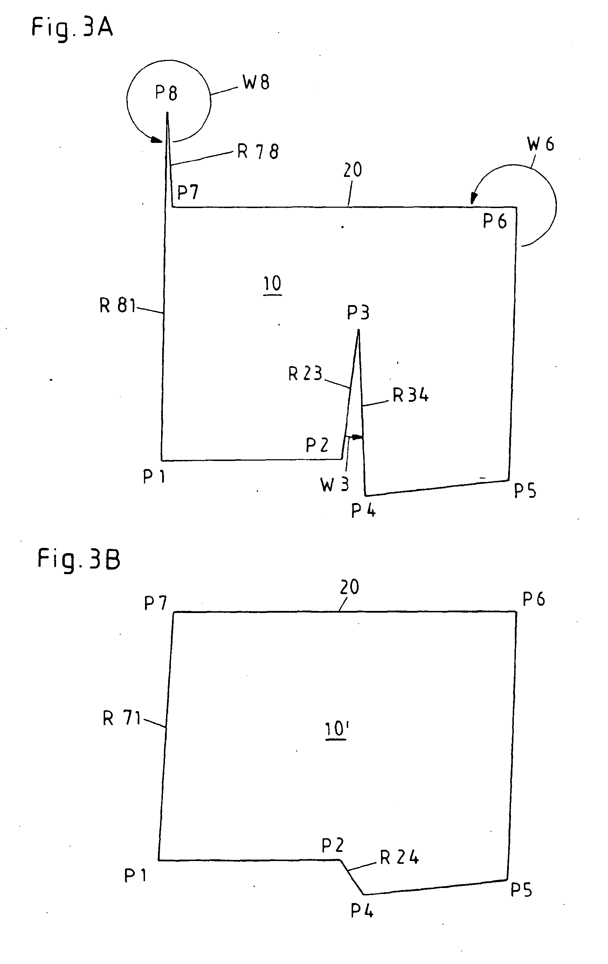

- Fig. 3A: in schematischer Darstellung einen als Fläche mit nadelförmiger Einkerbung sowie mit nadelförmiger Spitze ausgebildeten und mit Eckpunkten versehenen zweidimensionalen Kartenbereich vor dem Generalisieren; und
- Fig. 3B: in schematischer Darstellung den als Fläche nunmehr ohne die nadelförmige Einkerbung sowie ohne die nadelförmige Spitze ausgebildeten und mit Eckpunkten versehenen zweidimensionalen Kartenbereich nach dem Generalisieren mittels des Verfahrens gemäß der vorliegenden Erfindung.

Gleiche oder ähnliche Ausgestaltungen, Elemente oder Merkmale sind in den Figuren 1A bis 3B mit identischen Bezugszeichen versehen.

### Bester Weg zur Ausführung der Erfindung

Das anhand der Figuren 1A, 1B, anhand der Figuren 2A, 2B sowie anhand der Figuren 3A, 3B vorgestellte Verfahren zum Glätten von als zweidimensionale Kartenbereiche 10 ausgestalteten Flächen
- mit nadelförmigen Einkerbungen (vgl. erstes Ausführungsbeispiel gemäß den Figuren 1A und 1B) bzw.
- mit nadelförmigen Spitzen (vgl. zweites Ausführungsbeispiel gemäß den Figuren 2A und 2B) bzw.
- sowohl mit nadelförmigen Einkerbungen als auch mit nadelförmigen Spitzen (vgl. drittes Ausführungsbeispiel gemäß den Figuren 3A und 3B)
dient zum Ermitteln von Kartendaten für eine Anzeigeeinrichtung eines einem Kraftfahrzeug zugeordneten Informationssystems; bei diesem Informationssystem handelt es sich um ein Navigationssystem.

Im exemplarisch gezeigten Falle der Figuren 1A und 1B ist beim Eckpunkt P3 eine nadelförmige Einkerbung gegeben; ein betrachteter Eckpunkt (hier: P3) weist hierbei eine sogenannte "nadelförmige" Einkerbung auf, wenn der sich am entsprechenden Eckpunkt (hier: P3) befindliche Winkel (hier: W3), der
- von der Randlinienstrecke (= hier: Verbindungsgerade R23) vom dem betrachteten Eckpunkt (hier: P3) vorhergehenden Eckpunkt (hier: P2) zum betrachteten Eckpunkt (hier: P3) und
- von der Randlinienstrecke (= hier: Verbindungsgerade R34) vom betrachteten Eckpunkt (hier: P3) zum dem betrachteten Eckpunkt (hier: P3) nachfolgenden Eckpunkt (hier: P4)
eingeschlossen wird, kleiner als ein maximaler Grenzwinkel oder Maximalwert von zehn Grad ist.

Im Unterschied hierzu ist der sich am Eckpunkt P6 befindliche Winkel W6, der ausgehend vom Eckpunkt P5 über den Eckpunkt P6 zum Eckpunkt P7 hin gemessen wird, gleich 270 Grad und damit nicht kleiner als der maximale Grenzwinkel oder Maximalwert von zehn Grad; dementsprechend ist der Eckpunkt P6 auch keine nadelförmige Einkerbung.

im dargestellten Ausführungsbeispiel sind die Eckpunkte P1, P2, P3, P4, P5, P6, P7, P8 des Kartenbereichs 10 hierbei im mathematisch positiven Sinne, das heißt entgegen dem Uhrzeigersinn orientiert; dies bedeutet, daß beim Entlangfahren auf der Randlinie 20 von Eckpunkt zu Eckpunkt der Kartenbereich 10 immer links von der Randlinie 20 liegt; dementsprechend wird an jedem Eckpunkt derjenige Winkel betrachtet, der außerhalb des Kartenbereichs 10 gelegen ist, wobei ein Winkel Wi (i = 1, 2, 3, 4, 5, 6, 7, 8) an einem Eckpunkt Pi als Winkel vom vorhergehenden Eckpunkt Pi-1 über den betrachteten Eckpunkt Pi zum nachfolgenden Eckpunkt Pi+1 bestimmt wird.

Beim Verfahren gemäß den Figuren 1A und 1B wird also zunächst für den durch die Folge von acht Eckpunkten P1, P2, P3, P4, P5, P6, P7, P8 definierten Kartenbereich 10 der sich am jeweils gerade betrachteten Eckpunkt (hier: P3) befindliche Winkel (hier: W3) berechnet.

Die weitere Vorgehensweise hängt nun davon ab, ob der ermittelte Winkel W3 am betrachteten Eckpunkt P3 kleiner als der gegebene oder vorgebbare Grenzwert von zehn Grad ist; ist dies nicht der Fall, so wird für den im mathematisch positiven Sinne nächsten Eckpunkt der entsprechende Winkel berechnet.

Ist hingegen der ermittelte Winkel W3 am betrachteten Eckpunkt P3 kleiner als der gegebene oder vorgebbare Maximalwert von zehn Grad, so wird als nächstes der betrachtete Eckpunkt P3 aus der die Fläche beschreibenden Liste der Eckpunkte P1, P2, P3, P4, P5, P6, P7, P8 des Kartenbereichs 10 gelöscht.

Die durch das Löschen des betrachteten Eckpunkts P3 entstandene "Lücke" wird dadurch geschlossen, daß der dem gelöschten Eckpunkt P3 vorhergehende Eckpunkt P2 mit dem dem gelöschten Eckpunkt P3 nachfolgenden Eckpunkt P4 verbunden wird, so daß eine neue Randlinienstrecke (= hier: Verbindungsgerade R24; vgl. Figur 1B) vom dem gelöschten Eckpunkt P3 vorhergehenden Eckpunkt P2 zum dem gelöschten Eckpunkt P3 nachfolgenden Eckpunkt P4 entsteht.

Auf diese Weise entsteht wiederum eine Abfolge von nunmehr noch sieben Eckpunkten P1, P2, P4, P5, P6, P7, P8 (vgl. Figur 1B), durch die der nunmehr etwas größere, weil um die nadelförmige Einkerbung beim Eckpunkt P3 bereinigte Kartenbereich 10' definiert ist.

Diese ermittelte Folge von sieben Eckpunkten P1, P2, P4, P5, P6, P7, P8 kann schließlich als Unterfolge in einer Kartenspeichereinheit abgespeichert werden; die Fläche 10' mit den sieben Eckpunkten P1, P2, P4, P5, P6, P7, P8 weist keine nadelförmige(n) Einkerbung(en) mehr auf, so daß die im Ergebnis gebildete gesamte Kartenfläche 10' gemäß Figur 1B einfacher als die Ausgangskartenfläche 10 gemäß Figur 1A strukturiert ist.

Wie beschrieben, wird das vorstehend dargelegte Verfahren für jeden Eckpunkt P1, P2, P3, P4, P5, P6, P7, P8 des Kartenbereichs 10 in Figur 1A durchgeführt, und zwar nicht nur sukzessive (= im mathematisch positiven Sinne nacheinander), sondern erforderlichenfalls auch iterativ, das heißt ergebnisabhängig wiederholt solange, bis alle nadelförmigen Einkerbungen getilgt sind; wenn also bei einer Fläche ein Eckpunkt P3 gelöscht wurde, so wird diese Fläche noch einmal untersucht, und zwar solange bis keine nadelförmigen Einkerbungen mehr gefunden werden (vgl. das Ergebnis in Figur 1B).

Dies impliziert insbesondere, daß das vorstehend dargelegte Verfahren nach Löschen des betrachteten Eckpunkts P3
- für den dem gelöschten Eckpunkt P3 vorhergehenden Eckpunkt P2 und/oder
- für den dem gelöschten Eckpunkt P3 nachfolgenden Eckpunkt P4 durchgeführt werden kann.

Im exemplarisch gezeigten Falle der Figuren 2A und 2B ist beim Eckpunkt P3 eine nadelförmige Spitze gegeben; ein betrachteter Eckpunkt (hier: P3) weist hierbei eine sogenannte "nadelförmige" Spitze auf, wenn der sich am entsprechenden Eckpunkt (hier: P3) befindliche Winkel (hier: W3), der
- von der Randlinienstrecke (= hier: Verbindungsgerade R23) vom dem betrachteten Eckpunkt (hier: P3) vorhergehenden Eckpunkt (hier: P2) zum betrachteten Eckpunkt (hier: P3) und
- von der Randlinienstrecke (= hier: Verbindungsgerade R34) vom betrachteten Eckpunkt (hier: P3) zum dem betrachteten Eckpunkt (hier: P3) nachfolgenden Eckpunkt (hier: P4)
eingeschlossen wird, größer als ein minimaler Grenzwinkel oder Minimalwert von 350 Grad ist.

Im Unterschied hierzu ist der sich am Eckpunkt P6 befindliche Winkel W6, der ausgehend vom Eckpunkt P5 über den Eckpunkt P6 zum Eckpunkt P7 hin gemessen wird, gleich 270 Grad und damit nicht größer als der minimale Grenzwinkel oder Minimalwert von 350 Grad; dementsprechend ist der Eckpunkt P6 auch keine nadelförmige Spitze.

Im dargestellten Ausführungsbeispiel sind die Eckpunkte P1, P2, P3, P4, P5, P6, P7, P8 des Kartenbereichs 10 hierbei im mathematisch positiven Sinne, das heißt entgegen dem Uhrzeigersinn orientiert; dies bedeutet, daß beim Entlangfahren auf der Randlinie 20 von Eckpunkt zu Eckpunkt der Kartenbereich 10 immer links von der Randlinie 20 liegt; dementsprechend wird an jedem Eckpunkt derjenige Winkel betrachtet, der außerhalb des Kartenbereichs 10 gelegen ist, wobei ein Winkel Wi (i = 1, 2, 3, 4, 5, 6, 7, 8) an einem Eckpunkt Pi als Winkel vom vorhergehenden Eckpunkt Pi-1 über den betrachteten Eckpunkt Pi zum nachfolgenden Eckpunkt Pi+1 bestimmt wird.

Beim Verfahren gemäß den Figuren 2A und 2B wird also zunächst für den durch die Folge von acht Eckpunkten P1, P2, P3, P4, P5, P6, P7, P8 definierten Kartenbereich 10 der sich am jeweils gerade betrachteten Eckpunkt (hier: P3) befindliche Winkel (hier: W3) berechnet.

Die weitere Vorgehensweise hängt nun davon ab, ob der ermittelte Winkel W3 am betrachteten Eckpunkt P3 größer als der gegebene oder vorgebbare Grenzwert von 350 Grad ist; ist dies nicht der Fall, so wird für den im mathematisch positiven Sinne nächsten Eckpunkt der entsprechende Winkel berechnet.

Ist hingegen der ermittelte Winkel W3 am betrachteten Eckpunkt P3 größer als der gegebene oder vorgebbare Minimalwert von 350 Grad, so wird als nächstes der betrachtete Eckpunkt P3 aus der die Fläche beschreibenden Liste der Eckpunkte P1, P2, P3, P4, P5, P6, P7, P8 des Kartenbereichs 10 gelöscht.

Die durch das Löschen des betrachteten Eckpunkts P3 entstandene "Lücke" wird dadurch geschlossen, daß der dem gelöschten Eckpunkt P3 vorhergehende Eckpunkt P2 mit dem dem gelöschten Eckpunkt P3 nachfolgenden Eckpunkt P4 verbunden wird, so daß eine neue Randlinienstrecke (= hier: Verbindungsgerade R24; vgl. Figur 2B) vom dem gelöschten Eckpunkt P3 vorhergehenden Eckpunkt P2 zum dem gelöschten Eckpunkt P3 nachfolgenden Eckpunkt P4 entsteht.

Auf diese Weise entsteht wiederum eine Abfolge von nunmehr noch sieben Eckpunkten P1, P2, P4, P5, P6, P7, P8 (vgl. Figur 2B), durch die der nunmehr etwas kleinere, weil um die nadelförmige Spitze beim Eckpunkt P3 bereinigte Kartenbereich 10' definiert ist.

Diese ermittelte Folge von sieben Eckpunkten P1, P2, P4, P5, P6, P7, P8 kann schließlich als Unterfolge in einer Kartenspeichereinheit abgespeichert werden; die Fläche 10' mit den sieben Eckpunkten P1, P2, P4, P5, P6, P7, P8 weist keine nadelförmige(n) Spitze(n) mehr auf, so daß die im Ergebnis gebildete gesamte Kartenfläche 10' gemäß Figur 2B einfacher als die Ausgangskartenfläche 10 gemäß Figur 2A strukturiert ist.

Wie beschrieben, wird das vorstehend dargelegte Verfahren für jeden Eckpunkt P1, P2, P3, P4, P5, P6, P7, P8 des Kartenbereichs 10 in Figur 2A durchgeführt, und zwar nicht nur sukzessive (= im mathematisch positiven Sinne nacheinander), sondern erforderlichenfalls auch iterativ, das heißt ergebnisabhängig wiederholt solange, bis alle nadelförmigen Spitzen getilgt sind; wenn also bei einer Fläche ein Eckpunkt P3 gelöscht wurde, so wird diese Fläche noch einmal untersucht, und zwar solange bis keine nadelförmigen Spitzen mehr gefunden werden (vgl. das Ergebnis in Figur 2B).

Dies impliziert insbesondere, daß das vorstehend dargelegte Verfahren nach Löschen des betrachteten Eckpunkts P3
- für den dem gelöschten Eckpunkt P3 vorhergehenden Eckpunkt P2 und/oder
- für den dem gelöschten Eckpunkt P3 nachfolgenden Eckpunkt P4
durchgeführt werden kann.

Im exemplarisch gezeigten Falle der Figuren 3A und 3B ist beim Eckpunkt P3 eine nadelförmige Einkerbung und beim Eckpunkt P8 eine nadelförmige Spitze gegeben; hinsichtlich der Definition einer "nadelförmigen Einkerbung" bzw. einer "nadelförmigen Spitze" wie auch hinsichtlich der weiteren Definitionen, Erläuterungen und Nomenklaturen wird in diesem Zusammenhang auf die Erläuterungen zum ersten Ausführungsbeispiel gemäß den Figuren 1A und 1B bzw. auf die Erläuterungen zum zweiten Ausführungsbeispiel gemäß den Figuren 2A und 2B verwiesen, die vollumfänglich auch für das vorliegende dritte Ausführungsbeispiel gemäß den Figuren 3A und 3B gelten.

So weist zum Beispiel ein betrachteter Eckpunkt (hier: P8) eine sogenannte "nadelförmige" Spitze auf, wenn der sich am entsprechenden Eckpunkt (hier: P8) befindliche Winkel (hier: W8), der
- von der Randlinienstrecke (= hier: Verbindungsgerade R78) vom dem betrachteten Eckpunkt (hier: P8) vorhergehenden Eckpunkt (hier: P7) zum betrachteten Eckpunkt (hier: P8) und
- von der Randlinienstrecke (= hier: Verbindungsgerade R81) vom betrachteten Eckpunkt (hier: P8) zum dem betrachteten Eckpunkt (hier: P8) nachfolgenden Eckpunkt (hier: P1)
eingeschlossen wird, größer als ein minimaler Grenzwinkel oder Minimalwert von 350 Grad ist.

Beim Verfahren gemäß den Figuren 3A und 3B wird also zunächst für den durch die Folge von acht Eckpunkten P1, P2, P3, P4, P5, P6, P7, P8 definierten Kartenbereich 10 der sich am jeweils gerade betrachteten Eckpunkt (hier: P3) befindliche Winkel (hier: W3) berechnet.

Die weitere Vorgehensweise hängt nun davon ab, ob der ermittelte Winkel W3 am betrachteten Eckpunkt P3 kleiner als der gegebene oder vorgebbare Grenzwert von zehn Grad ist; ist dies nicht der Fall, so wird für den im mathematisch positiven Sinne nächsten Eckpunkt der entsprechende Winkel berechnet.

Ist hingegen der ermittelte Winkel W3 am betrachteten Eckpunkt P3 kleiner als der gegebene oder vorgebbare Maximalwert von zehn Grad, so wird als nächstes der betrachtete Eckpunkt P3 aus der die Fläche beschreibenden Liste der Eckpunkte P1, P2, P3, P4, P5, P6, P7, P8 des Kartenbereichs 10 gelöscht.

Die durch das Löschen des betrachteten Eckpunkts P3 entstandene "Lücke" wird dadurch geschlossen, daß der dem gelöschten Eckpunkt P3 vorhergehende Eckpunkt P2 mit dem dem gelöschten Eckpunkt P3 nachfolgenden Eckpunkt P4 verbunden wird, so daß eine neue Randlinienstrecke (= hier: Verbindungsgerade R24; vgl. Figur 3B) vom dem gelöschten Eckpunkt P3 vorhergehenden Eckpunkt P2 zum dem gelöschten Eckpunkt P3 nachfolgenden Eckpunkt P4 entsteht.

Auf diesse Weise entsteht wiederum eine Abfolge von nunmehr noch sieben Eckpunkten P1, P2, P4, P5, P6, P7, P8, durch die der nunmehr etwas größere, weil um die nadelförmige Einkerbung beim Eckpunkt P3 bereinigte Kartenbereich definiert ist.

Da das vorstehend dargelegte Verfahren für jeden Eckpunkt P1, P2, P3, P4, P5, P6, P7, P8 des Kartenbereichs 10 in Figur 3A durchgeführt, und zwar nicht nur sukzessive (= im mathematisch positiven Sinne nacheinander), sondern erforderlichenfalls auch iterativ, gelangt das Verfahren zwangsläufig auch zum gemäß Figur 3A im mathematisch positiven Sinne "letzten" Eckpunkt P8; auch für diesen zuletzt betrachteten Eckpunkt P8 wird der zugeordnete Winkel W8 berechnet.

Die weitere Vorgehensweise hängt nun davon ab, ob der ermittelte Winkel W8 am betrachteten Eckpunkt P8 größer als der gegebene oder vorgebbare Grenzwert von 350 Grad ist; ist dies nicht der Fall, so wird für den im mathematisch positiven Sinne nächsten Eckpunkt der entsprechende Winkel berechnet.

Ist hingegen der ermittelte Winkel W8 am betrachteten Eckpunkt P8 größer als der gegebene oder vorgebbare Minimalwert von 350 Grad, so wird als nächstes der betrachtete Eckpunkt P8 aus der die Fläche beschreibenden Liste der noch sieben Eckpunkte P1, P2, P4, P5, P6, P7, P8 des Kartenbereichs gelöscht.

Die durch das Löschen des betrachteten Eckpunkts P8 entstandene "Lücke" wird dadurch geschlossen, daß der dem gelöschten Eckpunkt P8 vorhergehende Eckpunkt P7 mit dem dem gelöschten Eckpunkt P8 nachfolgenden Eckpunkt P1 verbunden wird, so daß eine neue Randlinienstrecke (= hier: Verbindungsgerade R81; vgl. Figur 3B) vom dem gelöschten Eckpunkt P8 vorhergehenden Eckpunkt P7 zum dem gelöschten Eckpunkt P8 nachfolgenden Eckpunkt P1 entsteht.

Auf diese Weise entsteht wiederum eine Abfolge von nunmehr nur noch sechs Eckpunkten P1, P2, P4, P5, P6, P7 (vgl. Figur 3B), durch die der nunmehr wieder etwas kleinere, weil um die nadelförmige Spitze beim Eckpunkt P8 bereinigte Kartenbereich 10' definiert ist.

Diese ermittelte Folge von sechs Eckpunkten P1, P2, P4, P5, P6, P7 kann schließlich als Unterfolge in einer Kartenspeichereinheit abgespeichert werden; die Fläche 10' mit den sechs Eckpunkten P1, P2, P4, P5, P6, P7 weist keine nadelförmige(n) Einkerbung(en) sowie keine nadelförmige(n) Spitze(n) mehr auf, so daß die im Ergebnis gebildete gesamte Kartenfläche 10' gemäß Figur 3B wesentlich einfacher als die Ausgangskartenfläche 10 gemäß Figur 3A strukturiert ist.

Wie beschrieben, wird das vorstehend dargelegte Verfahren für jeden Eckpunkt P1, P2, P3, P4, P5, P6, P7, P8 des Kartenbereichs 10 in Figur 3A durchgeführt, und zwar nicht nur sukzessive (= im mathematisch positiven Sinne nacheinander), sondern erforderlichenfalls auch iterativ, das heißt ergebnisabhängig wiederholt solange, bis alle nadelförmigen Einkerbungen sowie alle nadelförmigen Spitzen getilgt sind; wenn also bei einer Fläche ein Eckpunkt P3 sowie ein Eckpunkt P8 gelöscht wurden, so wird diese Fläche noch einmal untersucht, und zwar solange bis keine nadelförmigen Einkerbungen sowie keine nadelförmigen Spitzen mehr gefunden werden (vgl. das Ergebnis in Figur 3B).

Dies impliziert insbesondere, daß das vorstehend dargelegte Verfahren nach Löschen des betrachteten Eckpunkts P3 bzw. P8
- für den dem gelöschten Eckpunkt P3 bzw. P8 vorhergehenden Eckpunkt P2 bzw. P7 und/oder
- für den dem gelöschten Eckpunkt P3 bzw. P8 nachfolgenden Eckpunkt P4 bzw. P1
durchgeführt werden kann.

Hinsichtlich der Nachweisbarkeit des Verfahrens gemäß der vorliegenden Erfindung ist noch zu ergänzen, daß es den auf der Anzeigeeinrichtung oder dem Display des Navigationssystems dargestellten Flächen 10, 10' nicht anzusehen ist, ob diese Flächen 10, 10' aus mehreren Einzelflächen aufgebaut sind oder nicht; hierzu müsste nicht die Darstellung auf dem Display, sondern die Daten auf dem Datenträger untersucht werden.

Für diese Untersuchung müsste das Format bekannt sein, in dem die Daten abgelegt sind. Wenn eine Fläche 10, 10' in verschiedenen Maßstäben unterschiedlich detailliert dargestellt wird, so besagt dies nur, daß sie für die verschiedenen Maßstäbe unterschiedlich generalisiert wurde, jedoch nicht, wie generalisiert wurde.

Abschließend sei darauf hingewiesen, daß im Rahmen der vorliegenden Erfindung bei ein und demselben zweidimensionalen Flächenbereich 10
- nur die nadelförmigen Einkerbungen geschlossen, die nadelförmigen Spitzen jedoch belassen werden können (beispielsweise dann, wenn auf nadelförmige Spitzen in Form von langen schmalen Flächen, wie etwa bei Flußläufen, nicht verzichtet werden soll, um diese Flußläufe auch weiterhin in ein Meer münden zu lassen), so wie dies anhand des ersten Ausführungsbeispiels gemäß den Figuren 1A und 1B veranschaulicht ist;
- nur die nadelförmigen Spitzen gelöscht, die nadelförmigen Einkerbungen jedoch belassen werden können, so wie dies anhand des zweiten Ausführungsbeispiels gemäß den Figuren 2A und 2B veranschaulicht ist;
- unabhängig voneinander die nadelförmigen Einkerbungen geschlossen (vgl. erstes Ausführungsbeispiel gemäß den Figuren 1A und 1B) und die nadelförmigen Spitzen gelöscht (vgl. zweites Ausführungsbeispiel gemäß den Figuren 2A und 2B) werden können; oder
- gewissermaßen in Kombination des erstes Ausführungsbeispiels mit dem zweiten Ausführungsbeispiel sowohl die nadelförmigen Einkerbungen geschlossen als auch die nadelförmigen Spitzen gelöscht werden können (vgl. drittes Ausführungsbeispiel gemäß den Figuren 3A und 3B).

## Patentansprüche

1. Verfahren zum Ermitteln von generalisierten Kartendaten für mindestens eine Anzeigeeinrichtung eines einem Fortbewegungsmittel zugeordneten Informationssystems, insbesondere Navigationssystems, zum Beispiel Navigationseinrichtung, wobei nadelförmige Einkerbungen und/oder nadelförmige Spitzen von zweidimensionalen Flächenbereichen gelöscht werden, aufweisend folgende Verfahrensschritte:
[a] Berechnen des außerhalb eines durch eine Folge von mehr als drei Eckpunkten (P1, P2, P3, P4, P5, P6, P7, P8) bestimmten zweidimensionalen Kartenbereichs (10) betrachteten Winkels (W3), den die vom einem betrachteten Eckpunkt (P3) vorhergehenden Eckpunkt (P2) zum betrachteten Eckpunkt (P3) führende Randlinienstrecke (R23) mit der vom betrachteten Eckpunkt (P3) zum dem betrachteten Eckpunkt (P3) nachfolgenden Eckpunkt (P4) führenden Randlinienstrecke (R34) einschließt;
[b] Ermitteln, ob der betrachtete Winkel (W3) kleiner als ein in der Größenordnung von etwa zehn Grad vorgegebener Maximalgrenzwinkel ist, und/oder Ermitteln, ob der betrachtete Winkel (W3) größer als ein in der Größenordnung von etwa 350 Grad vorgegebener Minimalgrenzwinkel ist;
[c] falls der betrachtete Winkel (W3) kleiner als der Maximalgrenzwinkel oder falls der betrachtete Winkel (W3) größer als der Minimalgrenzwinkel ist:
Löschen des betrachteten Eckpunkts (P3); und
Verbinden des dem gelöschten Eckpunkt (P3) vorhergehenden Eckpunkts (P2) mit dem dem gelöschten Eckpunkt (P3) nachfolgenden Eckpunkt (P4),
**dadurch gekennzeichnet,**
**dass** die Rohdaten in Form der ursprünglichen Folge von Eckpunkten (P1, P2, P3, P4, P5, P6, P7, P8) für unterschiedliche Darstellungsmaßstäbe unterschiedlich stark generalisiert werden und dass die unterschiedlich stark generalisierten Kartendaten in Form der ermittelten Folgen von Eckpunkten (P1, P2, P4, P5, P6, P7, P8) als Unterfolgen der ursprünglichen Folge von Eckpunkten (P1, P2, P3, P4, P5, P6, P7, P8) in mindestens einer Kartenspeichereinheit abgespeichert werden.

2. Verfahren gemäß Anspruch 1, **dadurch gekennzeichnet, dass** beim Verfahrensschritt [c] der betrachtete Eckpunkt (P3) aus mindestens einer geordneten Liste der Eckpunkte (P1 P2, P3, P4, P5, P6, P7, P8) des Kartenbereichs (10) gelöscht wird.

3. Verfahren gemäß Anspruch 1 oder 2, **dadurch gekennzeichnet, dass** nach Löschen des betrachteten Eckpunkts (P3) der Verfahrensschritt [a], der Verfahrensschritt [b] und erforderlichenfalls der Verfahrensschritt [c]
- für den dem gelöschten Eckpunkt (P3) vorhergehenden Eckpunkt (P2) und/oder
- für den dem gelöschten Eckpunkt (P3) nachfolgenden Eckpunkt (P4) durchgeführt werden.

4. Verfahren gemäß mindestens einem der Ansprüche 1 bis 3, **dadurch gekennzeichnet, dass** der Verfahrensschritt [a], der Verfahrensschritt [b] und erforderlichenfalls der Verfahrensschritt [c] für jeden Eckpunkt (P1, P2, P3, P4, P5, P6, P7, P8) des Kartenbereichs (10) durchgeführt werden.

5. Verfahren gemäß Anspruch 4, **gekennzeichnet durch** eine iterative und/oder sukzessive Vorgehensweise.

## Claims

1. Method for determining generalized map data for at least one display device of an information system, assigned to a means of locomotion, in particular a navigation system, for example a navigation device, needle-shaped notches and/or needle-shaped peaks of two-dimensional surface areas being deleted, having the following method steps:
[a] calculation of the angle (W3) which is viewed outside a two-dimensional map area (10) determined by a sequence of more than three corner points (P1, P2, P3, P4, P5, P6, P7, P8) and which is enclosed by the peripheral line section (R23), leading from the corner point (P2) preceding a viewed corner point (P3) to the viewed corner point (P3) together with the peripheral line section (R34) leading from the viewed corner point (P3) to the corner point (P4) following the viewed corner point (P3),
[b] determination of whether the viewed angle (W3) is less than a prescribed maximum limiting angle of the order of magnitude of approximately 10 degrees, and/or determination of whether the viewed angle (W3) is greater than a prescribed minimum limiting angle of the order of magnitude of approximately 350 degrees,
[c] if the viewed angle (W3) is less than the maximum limiting angle or if the viewed angle (W3) is greater than the minimum limiting angle:
deletion of the viewed corner point (P3); and
connection of the corner point (P2) preceding the deleted corner point (P3) to the corner point (P4) following the deleted corner point (P3),
**characterized in that** the raw data in the form of the original sequence of corner points (P1, P2, P3, P4, P5, P6, P7, P8) are generalized with different strengths for different display scales, and **in that** the map data generalized with different strengths are stored in at least one map memory unit in the form of the determined sequences of corner points (P1, P2, P4, P5, P6, P7, P8) as subsequences of the original sequence of corner points (P1, P2, P3, P4, P5, P6, P7, P8).

2. Method according to Claim 1, **characterized in that** in method step [c] the viewed corner point (P3) from at least one ordered list of corner points (P1, P2, P3, P4, P5, P6, P7, P8) of the map area (10) is deleted.

3. Method according to Claim 1 or 2, **characterized in that** after deletion of the viewed corner point (P3) the method step [a], the method step [b] and, if necessary, the method step [c] are carried out
- for the corner point (P2) preceding the deleted corner point (P3) and/or
- for the corner point (P4) following the deleted corner point (P3).

4. Method according to at least one of Claims 1 to 3, **characterized in that** the method step [a], the method step [b] and, if necessary, the method step [c] are carried out for each corner point (P1, P2, P3, P4, P5, P6, P7, P8) of the map area (10).

5. Method according to Claim 4, **characterized by** an iterative and/or successive process.

## Revendications

1. Procédé pour déterminer des données de carte généralisées pour au moins un dispositif d'affichage d'un système d'information, notamment un système de navigation, par exemple un dispositif de navigation, associé à un moyen de déplacement, des gorges en forme d'aiguille et/ou des pointes en forme d'aiguille étant effacées par des zones de surface bidimensionnelles, le procédé présentant les étapes suivantes :
(a) calcul de l'angle observé (W3) à l'extérieur d'une zone de carte (10) bidimensionnelle déterminée par une séquence de plus de trois points de référence (P1, P2, P3, P4, P5, P6, P7, P8), lequel inclut le segment de ligne de bordure (R23) qui mène d'un point de référence (P2) qui précède un point de référence observé (P3) jusqu'au point de référence observé (P3) avec le segment de ligne de bordure (R34) qui mène du point de référence observé (P3) au point de référence (P4) qui suit le point de référence observé (P3) ;
(b) détermination si l'angle observé (W3) est inférieur à un angle limite maximum prédéfini de l'ordre d'environ 10 degrés et/ou détermination si l'angle observé (W3) est supérieur à un angle limite minimum prédéfini de l'ordre d'environ 350 degrés ;
(c) si l'angle observé (W3) est inférieur à l'angle limite maximum ou si l'angle observé (W3) est supérieur à l'angle limite minimum :
effacement du point de référence observé (P3) ; et
liaison du point de référence (P2) qui précède le point de référence effacé (P3) avec le point de référence (P4) qui suit le point de référence effacé (P3) ;
**caractérisé en ce**
**que** les données brutes sous la forme de la séquence originelle de points de référence (P1, P2, P3, P4, P5, P6, P7, P8) sont généralisées avec des intensités différentes pour différentes échelles de représentation et que les données de carte généralisées avec des intensités différentes sous la forme des séquences déterminées de points de référence (P1, P2, P3, P4, P5, P6, P7, P8) sont mémorisées en tant que sous-séquences de la séquence originelle de points de référence (P1, P2, P3, P4, P5, P6, P7, P8) dans au moins une unité de mémorisation de cartes.

2. Procédé selon la revendication 1, **caractérisé en ce que** lors de l'étape (c) du procédé, le point de référence observé (P3) est effacé d'au moins une liste triée des points de référence (P1, P2, P3, P4, P5, P6, P7, P8) de la zone de carte (10).

3. Procédé selon la revendication 1 ou 2, **caractérisé en ce qu'**après l'effacement du point de référence observé (P3), l'étape (a) du procédé, l'étape (b) du procédé et si nécessaire l'étape (c) du procédé sont exécutées
- pour le point de référence (P2) qui précède le point de référence effacé (P3) et/ou
- pour le point de référence (P4) qui suit le point de référence effacé (P3).

4. Procédé selon au moins l'une des revendications 1 à 3, **caractérisé en ce que** l'étape (a) du procédé, l'étape (b) du procédé et si nécessaire l'étape (c) du procédé sont exécutées pour chaque point de référence (P1, P2, P3, P4, P5, P6, P7, P8) de la zone de carte (10).

5. Procédé selon la revendication 4, **caractérisé par** une procédure itérative et/ou successive.
